# FASCICULE DE BREVET EUROPEEN

(11) **EP 3 661 624 B1**
(45) Date de publication et mention de la délivrance du brevet: **18.09.2024**
(21) Numéro de dépôt: 18773786.1
(22) Date de dépôt: 13.07.2018
(51) Int. Cl.: B01D 53/04, B01D 53/047, C01B 3/56

(54) **PROCÉDÉ DE PRODUCTION CONTINUE D'UN FLUX GAZEUX D'HYDROGÈNE**
VERFAHREN ZUR KONTINUIERLICHEN HERSTELLUNG EINES GASFÖRMIGEN WASSERSTOFFSTROMS
METHOD FOR THE CONTINUOUS PRODUCTION OF A GASEOUS HYDROGEN STREAM

(30) Priorité: 03.08.2017 FR 1757491
(43) Date de publication de la demande: 10.06.2020
(73) Titulaire: L'Air Liquide, Société Anonyme pour l'Etude et l'Exploitation des Procédés Georges Claude, 75007 Paris (FR)
(72) Inventeur: GARY, Daniel, 78180 Montigny Le Bretonneux (FR); ALLIDIERES, Laurent, 38410 Saint Martin D'uriage (FR)
(74) Mandataire: Air Liquide
(86) Numéro de dépôt international: PCT/FR2018/051786
(87) Numéro de publication internationale: WO 2019/025690

(56) Documents cités:
- EP-A1- 1 097 902
- EP-A1- 3 181 517
- EP-A2- 1 826 177
- WO-A2-2008/132377
- FR-A1- 2 991 192
- JP-A- 2011 167 629
- US-A- 5 914 455
- US-A1- 2009 223 371

## Description

La présente invention est relative à un procédé de production d'un flux gazeux d'hydrogène présentant une teneur en CO inférieure à 1 ppm à partir de gaz de synthèse.

La production massive d'hydrogène se fait classiquement par le vaporeformage d'une source carboné comme le gaz naturel très riche en méthane (dit procédé SMR). Ce procédé conduit à la formation d'un gaz de synthèse majoritairement riche en H2 et en CO. Pour obtenir de l'hydrogène, le gaz de synthèse sera post traité par exemple par des procédés de purification, voire de distillation.

En fonction du degré de pureté exigé et du cout de production ciblé, plusieurs solutions sont proposées.

La production d'H2 ultra pur pourra être obtenue par distillation cryogénique d'une mixture riche en H2/CO. Préalablement à la phase de distillation, le gaz de synthèse produit devra être décarbonaté et déshydraté. Cette technique est intéressante quand on veut produire en même temps les 2 molécules H2 et CO. Le gaz résiduaire riche en H2 provenant d'une boite froide de séparation cryogénique de CO contient environ 97%.

Cette même mixture H2/CO (gaz de synthèse) provenant directement du four de vaporeformage, ou ayant subit une ou plusieurs étapes de réaction à l'eau (Water Gas Shift) peut également être post-traitée par passage sur un PSA (Pressure Swing Adsorption = procédé d'adsorption à modulation de pression), mais dans ce cas dû aux limites du PSA et pour ne pas trop pénaliser son rendement, le produit final peut contenir des impuretés de type N2, CO du niveau de quelques ppm à quelques dizaines ou centaines de ppm.

Pour certaines applications industrielles (par exemple l'alimentation d'une pile à combustible) la molécule critique s'avère être le CO qui est un poison pour la pile à combustible si sa concentration est supérieure à 200ppb. Cette valeur risque dans le futur de descendre à 100ppb afin d'autoriser des technologies de pile à combustible moins riches en catalyseur onéreux (type platine)

Une technique pour purifier l'hydrogène comportant entre 0.5 et 100 ppm de CO jusqu'à 100ppb consiste à faire passer le flux gazeux dans un adsorbant (charbon actif ou tamis moléculaire) à très basse température, typiquement celle de l'azote liquide. L'inconvénient de cette technique réside principalement dans le cout de l'équipement (réservoirs sous pression cryogéniques, échangeurs de chaleurs, cryostats LN2) ainsi que les coûts opératoires (LN2)

Une autre technique de purification consiste à faire passer l'hydrogène à travers une membrane métallique recouverte de Palladium. Du fait du cout du Palladium, cette technique est aussi onéreuse. De plus, l'hydrogène est récupéré à basse pression du fait de la perte de charge dans la membrane.

WO 2008/132377 A2, FR 2 991 192 A1, EP 1826177 A2, EP 3181517 A1 et JP 2011-167629 A divulguent d'ultérieurs procédés de l'art antérieur.

Partant de là un problème qui se pose est de fournir un procédé amélioré de production d'un flux d'hydrogène exempt de monoxyde de carbone, sans pour autant avoir recours à l'adsorption cryogénique ou les membranes métalliques.

Une solution de la présente invention est un procédé de production d'un flux gazeux d'hydrogène 5 présentant une teneur en CO inférieure à 1 ppm à partir de gaz de synthèse tel que défini à la revendication 1, ce procédé comprenant un cycle de production présentant deux phases :
- une première phase comprenant les étapes successives suivantes :
   a) une étape de purification du gaz de synthèse 1 par adsorption au moyen d'une unité de type PSA 2,
   b) une étape de récupération en sortie de l'unité PSA d'un flux gazeux d'hydrogène 3 présentant une teneur en CO supérieure à 1 ppm,
   c) une étape de purification du flux gazeux récupéré à l'étape b) par adsorption au moyen d'une unité de type TSA 4 de type chimisorbeur, et
   d) une étape de récupération en sortie de l'unité TSA d'un flux gazeux d'hydrogène 5 présentant une teneur en CO inférieure à 1 ppm.
- une deuxième phase, comprenant les étapes successives suivantes :
   e) une étape de purification du gaz de synthèse 1 par adsorption au moyen de l'unité de type PSA 2,
   f) une étape de récupération en sortie de l'unité PSA d'un flux gazeux d'hydrogène 5 présentant une teneur en CO inférieure à 1 ppm,
avec pendant toute la durée des étapes e) et f) l'unité TSA est contournée 7 par le flux gazeux d'hydrogène et régénérée 6.

Par TSA on entend les procédés à modulation de température (Température Swing Adsorption).

Dans les procédés TSA, l'adsorbant en fin d'utilisation est régénéré in situ, c'est-à-dire que les impuretés arrêtées sont évacuées afin que ledit adsorbant récupère l'essentiel de ses capacités d'adsorption et puisse recommencer un cycle d'épuration, l'effet de régénération essentiel étant dû à une élévation de température. Pendant la deuxième phase l'unité TSA est contournée au moyen d'une ligne de contournement 7,

Dans les procédés de type PSA, l'adsorbant en fin de phase de production est régénéré par désorption des impuretés obtenue au moyen d'une baisse de leur pression partielle. Cette baisse de pression peut être obtenue par une baisse de la pression totale et/ou par balayage avec un gaz exempt ou contenant peu d'impuretés.

Selon le cas, le procédé selon l'invention peut présenter une ou plusieurs des caractéristiques suivantes :
- l'unité TSA comprend un seul adsorbeur 4.
- l'adsorbeur comprend un matériau actif qui va chimisorber au moins une partie du CO, ce matériau actif comprend du nickel et/ou du cuivre.
- l'unité PSA 2 comprend au moins deux adsorbeurs qui suivent chacun en décalage un cycle de pression comprenant les étapes d'adsorption, de dépressurisation et de repressurisation.
- le cycle de pression effectué pendant la deuxième phase présente une durée inférieure à la durée du cycle de pression effectué pendant la première phase.
- le cycle de pression pendant la première phase et le cycle de pression pendant la deuxième phase présentent une durée identique et la dépressurisation du cycle de pression effectuée pendant la deuxième phase est réalisée à une pression inférieure à la pression de la dépressurisation effectuée pendant la première phase. En effet, dans ce cas la pression sera abaissée d'au moins 50 mbar
- l'unité PSA comprend au moins un adsorbeur comprenant une couche d'alumine, une couche de charbon actif et une couche de tamis moléculaire.
- la durée de la première phase est supérieure à au moins 10fois la durée de la seconde phase.

La présente invention porte sur la fourniture d'H2 ultra pur, produit à partir d'une source de type gaz de synthèse, ou de gaz très riche en H2. Cette mixture riche en H2 sera purifiée la plupart du temps en 2 étapes. La méthodologie proposée combine deux sous-procédés couplés à savoir :
- premier sous-procédé : le flux gazeux d'alimentation en hydrogène est introduit dans une unité de type PSA comprenant au moins deux adsorbeurs chargés de différents adsorbants répartis par strates et destinés au piégeage par adsorption physiques des impuretés. Le PSA va fonctionner en cycles courts (quelques minutes). Les adsorbeurs de l'unité PSA vont suivre en décalage les étapes successives suivantes : adsorption à pression haute du cycle, décompression à co-courant, décompression à contre-courant, élution, recompression à contre-courant, recompression à co-courant. Typiquement les adsorbeurs de l'unité PSA pourront contenir une couche d'alumine pour éliminer la vapeur d'eau, une ou plusieurs couches de charbon actif pour éliminer certaines molécules comme le CO2, le CH4 et la majeure partie du CO et de l'azote, une ou plusieurs couches de tamis moléculaire pour pousser l'élimination des traces de CO et d'azote. L'hydrogène ainsi produit aura une pureté > 99.999%, les impuretés résiduelles seront minimes (ppm à quelques dizaine de ppm). Cette pureté en hydrogène n'est toutefois pas suffisante pour son utilisation dans une pile à combustible du fait de la présence du CO (teneur > ppm).
- deuxième sous-procédé : l'hydrogène impur sortant du PSA est purifié par passage dans une unité TSA, qui comprend de préférence un unique adsorbeur chargé par un matériau actif qui va chimisorber l'impureté résiduelle de CO. Le TSA va fonctionner en cycles longs : quelques jours, voire semaine, voire mois. La régénération du TSA se fera préférentiellement sous une température supérieure à 150°C. La température du flux de régénération (azote, hydrogène, ou mélange) sera élevée au moyen d'un système de chauffage (réchauffeur). La durée de chauffage du flux de régénération sera maintenue jusqu'à la fin du cycle de régénération, à l'issu le réchauffeur sera arrêté, le réacteur sera balayé et rincé à l'hydrogène pur, puis isolé sous atmosphère H2. La température du TSA reviendra à température ambiante par échange convectif avec son environnement, ou par circulation d'hydrogène à température ambiante, ou par circulation de liquide de refroidissement dans le réacteur. Une fois à température ambiante, le TSA sera à nouveau disponible et opérationnel pour un nouveau cycle de purification.

On récupère en sortie de l'unité TSA un flux gazeux d'hydrogène présentant une teneur en CO inférieure à 1 ppm.

Pendant toute la durée de la régénération du TSA, le PSA est réglé en « haute pureté » ; autrement dit le rendement du PSA est abaissé et la production d'hydrogène présentant une teneur en CO inférieure à 1 ppm est rendue possible soit en diminuant le temps du cycle global, soit préférentiellement en rabaissant la pression de dépressurisation.

Aussi pendant toute la durée de la régénération du TSA le flux gazeux d'hydrogène n'est plus purifié en 2 étapes mais en une seule étape, et au moyen de l'unité PSA. Le TSA pendant ce mode de fonctionnement est alors contourné au moyen de la ligne de contournement..

La solution selon l'invention permet ainsi de produire en continu un flux gazeux d'hydrogène présentant une teneur en CO inférieure à 1 ppm tout en limitant la quantité d'adsorbeurs de l'unité TSA, et en optimisant le rendement du PSA en amont qui ne voit son rendement dégradé en mode « haute pureté » que quelques heures par jour, semaines, voir mois.

Les essais ont montrés la possibilité d'épurer à une teneur inférieur à 0.1 ppm en CO, un flux d'hydrogène contaminé par du CO présent à l'état de traces (20 - 100 ppm). Cette purification par TSA est réalisée à température ambiante et à la pression délivrée par le PSA amont (typiquement dans la plage 15 -35 atmosphères). Le contrôle et l'efficacité de la purification TSA sont effectués au moyen d'un analyseur commercial de type FTIR (Fourier Transform InfraRed spectroscopy) dont le niveau de détection en CO est < à 100ppb. La purification TSA se poursuit à minima jusqu'à l'apparition (la percée) de traces de CO en sortie d'adsorbeur. La purification pourra se poursuivre au-delà afin d'obtenir la courbe de percée du CO en fonction du temps de purification.

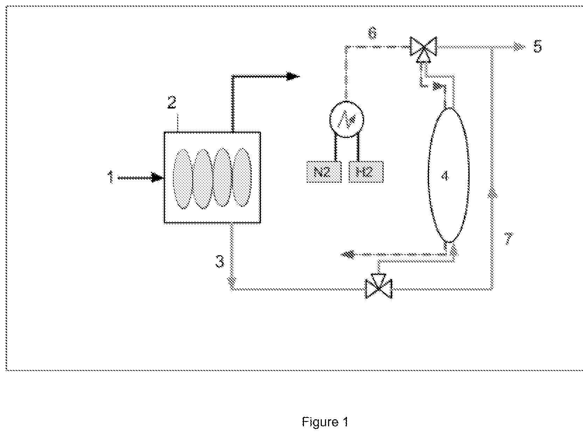

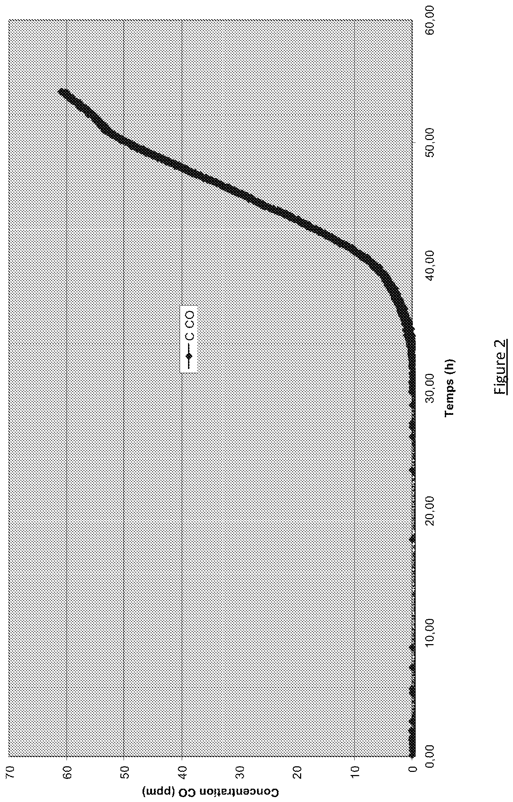

La figure 2 illustre les résultats d'un test TSA alimenté par de l'hydrogène impur (contaminé par 95 ppm de CO), L'ultra purification (<0.1ppm) est maintenue pendant 30 heures ou plus, au-delà le CO perce. La capacité d'adsorption du matériau chimisorbant recherchée peut donc être calculée par ce type d'essai.

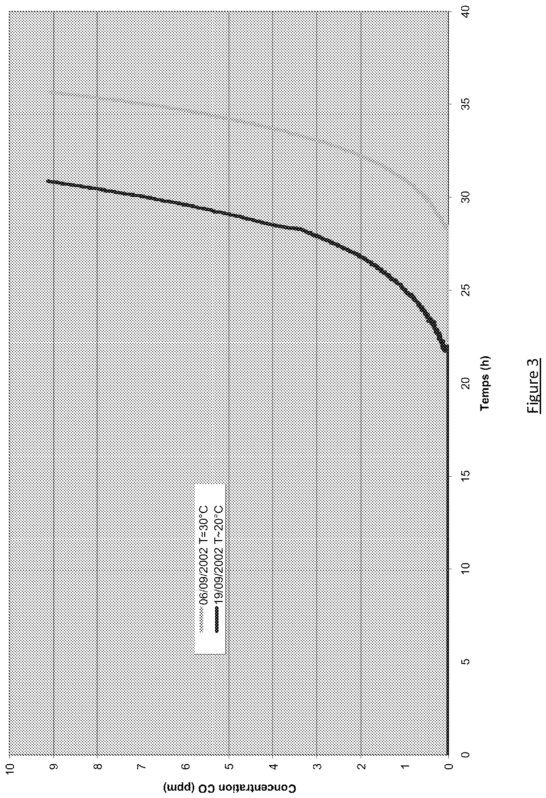

La figure 3 présente également des résultats de percée du CO au travers d'un TSA avec des conditions paramétriques différentes, montrant l'impact de la température opératoire. Un gradient de température de 10°C change significativement la capacité d'arrêt du chimisorbant.

Cette observation est importante pour le dimensionnement d'un TSA, les données prises à basses températures permettront des designs de TSA conservateurs, donc sans risque dès lors que la température ambiante (donc opératoire) augmentera.

Cette ultra purification induite par le TSA est possible au moyen d'un matériau par exemple à base de Ni, voire de Cu.

La capacité d'adsorption du Ni ou du Cu en CO est très dépendante des conditions opératoires.

Des conditions de régénérations (basse pression c'est à dire de l'ordre ou inférieure à 1.5bar et température supérieure à 150°C) ont été définies afin d'utiliser l'adsorbant en TSA et la répétabilité a été vérifiée. En fonction des conditions opératoires et du design, le TSA peut par exemple n'être régénéré qu'une fois par mois.

## Revendications

1. Procédé de production d'un flux gazeux d'hydrogène (5) présentant une teneur en CO inférieure à 1 ppm à partir de gaz de synthèse (1), comprenant un cycle de production présentant deux phases :
- une première phase comprenant les étapes successives suivantes :
a) une étape de purification du gaz de synthèse (1) par adsorption au moyen d'une unité de type PSA (2),
b) une étape de récupération en sortie de l'unité PSA (2) d'un flux gazeux d'hydrogène présentant une teneur en CO supérieure à 1 ppm,
c) une étape de purification du flux gazeux récupéré à l'étape b) par adsorption au moyen d'une unité de type TSA de type chimisorbeur (4), et
d) une étape de récupération en sortie de l'unité TSA d'un flux gazeux d'hydrogène (5) présentant une teneur en CO inférieure à 1 ppm.
- une deuxième phase, comprenant les étapes successives suivantes :
e) une étape de purification du gaz de synthèse (1) par adsorption au moyen de l'unité de type PSA (2),
f) une étape de récupération en sortie de l'unité PSA d'un flux gazeux d'hydrogène (5) présentant une teneur en CO inférieure à 1 ppm,
avec pendant toute la durée de l'étape e) et f) l'unité TSA est contournée (7) par le flux gazeux d'hydrogène et régénérée (6), et pendant toute la durée de la régénération du TSA, le PSA est réglé en « haute pureté » ; autrement dit le rendement du PSA est abaissé et la production d'hydrogène présentant une teneur en CO inférieure à 1 ppm est rendue possible soit en diminuant le temps du cycle global, soit préférentiellement en rabaissant la pression de dépressurisation.

2. Procédé selon la revendication 1, **caractérisé en ce que** l'unité TSA comprend un seul adsorbeur (4).

3. Procédé selon la revendication 2, **caractérisé en ce que** l'adsorbeur comprend un matériau actif qui va chimisorber au moins une partie du CO, ce matériau actif comprenant du nickel et/ou du cuivre.

4. Procédé selon l'une des revendications 1 à 3, **caractérisé en ce que** l'unité PSA (2) comprend au moins deux adsorbeurs qui suivent chacun en décalage un cycle de pression comprenant les étapes d'adsorption, de dépressurisation et de repressurisation.

5. Procédé selon la revendication 4, **caractérisé en ce que** le cycle de pression effectué pendant la deuxième phase présente une durée inférieure à la durée du cycle de pression effectué pendant la première phase.

6. Procédé selon la revendication 4, **caractérisé en ce que**
- le cycle de pression pendant la première phase et le cycle de pression pendant la deuxième phase présentent une durée identique et
- la depressurisation du cycle de pression effectuée pendant la deuxième phase est réalisée à une pression inférieure à la pression de la depressurisation effectuée pendant la première phase.

7. Procédé selon l'une des revendications 1 à 6, **caractérisé en ce que** l'unité PSA (2) comprend au moins un adsorbeur comprenant une couche d'alumine, une couche de charbon actif et une couche de tamis moléculaire.

8. Procédé selon l'une des revendications 1 à 7, **caractérisé en ce que** la durée de la première phase est supérieure à 10 fois la durée de la seconde phase.

## Patentansprüche

1. Verfahren zur Herstellung eines gasförmigen Wasserstoffstroms (5) mit einem CO-Gehalt von weniger als 1 ppm aus Synthesegas (1), das einen Produktionszyklus umfasst, der zwei Phasen aufweist:
- eine erste Phase, welche die folgenden aufeinanderfolgenden Schritte umfasst:
a) einen Reinigungsschritt des Synthesegases (1) durch Adsorption mithilfe einer Einheit vom PSA-Typ (2),
b) einen Schritt des Gewinnens eines gasförmigen Wasserstoffstroms mit einem CO-Gehalt von mehr als 1 ppm am Auslass der PSA-Einheit (2),
c) einen Reinigungsschritt des in Schritt b) gewonnenen gasförmigen Stroms durch Adsorption mithilfe einer Einheit vom TSA-Typ vom Chemisorber-Typ (4) und
d) einen Schritt des Gewinnens eines gasförmigen Wasserstoffstroms (5) mit einem CO-Gehalt von weniger als 1 ppm am Auslass der TSA-Einheit,
- eine zweite Phase, welche die folgenden aufeinanderfolgenden Schritte umfasst:
e) einen Reinigungsschritt des Synthesegases (1) durch Adsorption mithilfe der Einheit vom PSA-Typ (2),
f) einen Schritt des Gewinnens eines gasförmigen Wasserstoffstroms (5) mit einem CO-Gehalt von weniger als 1 ppm am Auslass der PSA-Einheit,
mit während der gesamten Dauer von Schritt e) und f) die TSA-Einheit vom gasförmigen Wasserstoffstrom umgangen (7) wird und regeneriert (6) wird und während der gesamten Dauer der Regeneration des TSA das PSA auf "hohe Reinheit" eingestellt wird; mit anderen Worten, die Ausbeute des PSA vermindert und die Erzeugung von Wasserstoff mit einem CO-Gehalt von weniger als 1 ppm ermöglicht wird, indem entweder die Gesamtdauer des Zyklus vermindert oder vorzugsweise der Druck der Druckentlastung erniedrigt wird.

2. Verfahren nach Anspruch 1, **dadurch gekennzeichnet, dass** die TSA-Einheit einen einzigen Adsorber (4) umfasst.

3. Verfahren nach Anspruch 2, **dadurch gekennzeichnet, dass** der Adsorber ein aktives Material umfasst, das zumindest einen Teil des CO chemisorbiert, wobei dieses aktive Material Nickel und/oder Kupfer umfasst.

4. Verfahren nach einem der Ansprüche 1 bis 3, **dadurch gekennzeichnet, dass** die PSA-Einheit (2) mindestens zwei Adsorber umfasst, die jeweils versetzt einem Druckzyklus folgen, der die Schritte einer Adsorption, einer Druckentlastung und einer erneuten Druckbeaufschlagung umfasst.

5. Verfahren nach Anspruch 4, **dadurch gekennzeichnet, dass** die Dauer des während der zweiten Phase durchgeführten Druckzyklus geringer als die Dauer des während der ersten Phase durchgeführten Druckzyklus ist.

6. Verfahren nach Anspruch 4, **dadurch gekennzeichnet, dass**:
- der Druckzyklus während der ersten Phase und der Druckzyklus während der zweiten Phase eine identische Dauer aufweisen und
- die während der zweiten Phase durchgeführte Druckentlastung des Druckzyklus bei einem Druck durchgeführt wird, der niedriger als der Druck der während der ersten Phase durchgeführte Druckentlastung ist.

7. Verfahren nach einem der Ansprüche 1 bis 6, **dadurch gekennzeichnet, dass** die PSA-Einheit (2) mindestens einen Adsorber umfasst, der eine Aluminiumoxidschicht, eine Aktivkohleschicht und eine Molekularsiebschicht umfasst.

8. Verfahren nach einem der Ansprüche 1 bis 7, **dadurch gekennzeichnet, dass** die Dauer der ersten Phase mehr als das 10-Fache der Dauer der zweiten Phase beträgt.

## Claims

1. Process for the production of a hydrogen gas stream (5) with a CO content of less than 1 ppm starting from synthesis gas (1), comprising a production cycle with two phases:
- a first phase comprising the following successive steps:
a) a step of purification of the synthesis gas (1) by adsorption by means of a unit of PSA type (2),
b) a step of recovery, at the outlet of the PSA unit (2), of a hydrogen gas stream with a CO content of more than 1 ppm,
c) a step of purification of the gas stream recovered in step b) by adsorption by means of a unit of TSA type of chemisorber type (4), and
d) a step of recovery, at the outlet of the TSA unit, of a hydrogen gas stream (5) with a CO content of less than 1 ppm,
- a second phase comprising the following successive steps:
e) a step of purification of the synthesis gas (1) by adsorption by means of the unit of PSA type (2),
f) a step of recovery, at the outlet of the PSA unit, of a hydrogen gas stream (5) with a CO content of less than 1 ppm,
with, throughout the duration of step e) and f), the TSA unit is bypassed (7) by the hydrogen gas stream and regenerated (6), and, throughout the duration of the regeneration of the TSA, the PSA is set to "high purity"; in other words, the yield of the PSA is lowered and the production of hydrogen exhibiting a CO content of less than 1 ppm is rendered possible, either by reducing the time of the overall cycle or, preferably, by reducing the depressurization pressure.

2. Process according to Claim 1, **characterized in that** the TSA unit comprises only one adsorber (4).

3. Process according to Claim 2, **characterized in that** the adsorber comprises an active material which will chemisorb at least a part of the CO, this active material comprising nickel and/or copper.

4. Process according to one of Claims 1 to 3, **characterized in that** the PSA unit (2) comprises at least two adsorbers which each follow, in staggered fashion, a pressure cycle comprising the adsorption, depressurization and repressurization stages.

5. Process according to Claim 4, **characterized in that** the pressure cycle carried out during the second phase exhibits a shorter duration than the duration of the pressure cycle carried out during the first phase.

6. Process according to Claim 4, **characterized in that**:
- the pressure cycle during the first phase and the pressure cycle during the second phase exhibit an identical duration and
- the depressurization of the pressure cycle carried out during the second phase is carried out at a lower pressure than the pressure of the depressurization carried out during the first phase.

7. Process according to one of Claims 1 to 6, **characterized in that** the PSA unit (2) comprises at least one adsorber comprising a layer of alumina, a layer of activated carbon and a layer of molecular sieve.

8. Process according to one of Claims 1 to 7, **characterized in that** the duration of the first phase is greater than 10 times the duration of the second phase.
